# EUROPÄISCHE PATENTSCHRIFT

(11) **EP 3 317 507 B1**
(45) Veröffentlichungstag und Bekanntmachung des Hinweises auf die Patenterteilung: **10.07.2019**
(21) Anmeldenummer: 16722150.6
(22) Anmeldetag: 06.05.2016
(51) Int. Cl.: F02M 21/02, F16K 31/06, F16K 25/00, F16K 1/36

(54) **GASVENTIL**
GAS VALVE
SOUPAPE À GAZ

(30) Priorität: 03.07.2015 DE 102015212473
(43) Veröffentlichungstag der Anmeldung: 09.05.2018
(73) Patentinhaber: Robert Bosch GmbH, 70442 Stuttgart (DE)
(72) Erfinder: ZEHETBAUER, Thomas, 4101 Feldkirchen an der Donau (AT); WINKLER, Bernd, 4490 St. Florian (AT); PLOECKINGER, Andreas, 4623 Gunskirchen (AT); FOSCHUM, Paul, 4040 Linz (AT)
(86) Internationale Anmeldenummer: PCT/EP2016/060216
(87) Internationale Veröffentlichungsnummer: WO 2017/005393

(56) Entgegenhaltungen:
- EP-A2- 2 383 457
- EP-A2- 2 818 679
- DE-A1-102010 042 607

## Beschreibung

Die Erfindung betrifft ein Gasventil zum Eindosieren eines gasförmigen Brennstoffs in einen Ansaugtrakt einer Verbrennungskraftmaschine mit den Merkmalen des Oberbegriffs des Anspruchs 1.

### Stand der Technik

Ein Gasventil der vorstehend genannten Art kann insbesondere zur Brennstoffversorgung von Gas- oder Gas-Diesel-Motoren in Personenkraft- oder Nutzfahrzeugen, in Schienenfahrzeugen und/oder auf Schiffen verwendet werden. Weitere mögliche Applikationen stellen Gas- oder Gas-Diesel-Motoren in Anlagen zur Energiegewinnung und/oder Energieerzeugung dar.

Aus der Offenlegungsschrift DE 103 53 011 A1 geht beispielhaft ein Gasventil hervor, das insbesondere für den Einsatz in einem Gasmotor ausgelegt ist und der Regelung eines Gasstroms von einer Zuströmseite zu einer Abströmseite dient. Das Gasventil weist ein Ventilgehäuse auf, in dem eine Betätigungseinheit für einen Magnetanker aufgenommen ist, der in dem Ventilgehäuse axial verschiebbar geführt ist. Der Magnetanker ist mit einem Ventilschließglied versehen, an dessen Stirnseite ein Dichtelement angeordnet ist, das derart mit einem an einer Sitzplatte ausgebildeten Ventilsitz zusammenwirkt, dass ein Gasstrom durch Abströmöffnungen der Sitzplatte steuerbar ist. Um den Verschließ im Bereich des Ventilsitzes zu reduzieren, ist das Dichtelement aus einem mit einem Füllstoff versehenen Kunststoff gebildet.

Aus der Offenlegungsschrift DE 10 2010 042 607 A1 ist ein elektromagnetisches Ventil für Gase bekannt bei dem das scheibenförmige Schließglied durch den Magnetanker gebildet wird.

Der vorliegenden Erfindung liegt die Aufgabe zugrunde, ein verschleißoptimiertes Gasventil anzugeben, das zudem besonders kompaktbauend ist.

Zur Lösung der Aufgabe wird das Gasventil mit den Merkmalen des Anspruchs 1 vorgeschlagen. Vorteilhafte Weiterbildungen der Erfindung sind den Unteransprüchen zu entnehmen.

### Offenbarung der Erfindung

Das zum Eindosieren eines gasförmigen Brennstoffs in einen Ansaugtrakt einer Verbrennungskraftmaschine vorgeschlagene Gasventil umfasst einen Elektromagneten und einen mit dem Elektromagneten zusammenwirkenden hubbeweglichen Anker, der in Richtung eines Ventilsitzelements, in dem mindestens eine Durchströmöffnung ausgebildet ist, von der Federkraft mindestens einer Schließfeder beaufschlagt ist. Erfindungsgemäß ist der Anker als scheibenförmiger Verbundkörper ausgebildet, der mindestens zwei, vorzugsweise drei, konzentrisch zueinander angeordnete und ineinander liegende Teile umfasst. Mindestens ein Teil ist dabei ringförmig ausgebildet und bildet eine mit der im Ventilsitzelement ausgebildeten Durchströmöffnung zusammenwirkende Dichtfläche aus. Das ringförmige, die Dichtfläche ausbildende Teil des Ankers weist mindestens eine Durchströmöffnung auf, die vorzugsweise kreisbogenförmig und radial versetzt zu der mindestens einen Durchströmöffnung des Ventilsitzelements angeordnet ist.

Durch die Scheibenform des Ankers kann die Bauhöhe des Gasventils, d. h. die Abmessung des Gasventils in axialer Richtung, reduziert werden.

Die Ausbildung des Ankers als aus mehreren Teilen zusammengesetzter Verbundkörper erlaubt die Ausbildung unterschiedlicher Funktionszonen, die aus unterschiedlichen Materialien gefertigt sein können, um Material und Funktion aufeinander abzustimmen. Neben der Ankerfunktion wird vorliegend zumindest eine Dichtfunktion als weitere Funktion realisiert. Die zur Fertigung dieser Funktionszonen verwendeten Materialien können sich daher vorrangig hinsichtlich ihrer magnetischen Eigenschaften unterscheiden.

Die in den Anker integrierte Dichtfunktion macht ein separates hubbewegliches Dichtelement entbehrlich. Dadurch wird die Bauhöhe weiter reduziert. Ferner führen die Scheibenform des Ankers und der Wegfall eines separaten Dichtelements zu einer Reduzierung der bewegten Masse. Dies hat zur Folge, dass die Aufschlagenergie des Ankers beim Schließen des Gasventils geringer ist und der Verschleiß im Sitzbereich gemindert wird. Mindestens ein weiterer positiver Nebeneffekt der reduzierten bewegten Masse ist, dass der erforderliche Ansteuerstromverbrauch sinkt und/oder die Schaltzeiten geringer sind.

Die im Anker ausgebildete Durchströmöffnung soll eine gleichmäßige Verteilung des einzudosierenden Gases im Ventilraum sicherstellen. Denn diese fördert ein gleichmäßiges Anströmen der mindestens einen im Ventilelement ausgebildeten Durchströmöffnung, wenn der Anker vom Ventilsitzelement abhebt. Die Kreisbogenform der im Anker und im Ventilsitzelement ausgebildeten Durchströmöffnungen besitzt den Vorteil, dass das Gasventil unabhängig von der Winkellage der beiden Bauteile zueinander dicht schließt, sofern ein radialer Versatz der kreisbogenförmigen Durchströmöffnungen gewährleistet ist.

Bevorzugt besitzt das ringförmige, die Dichtfläche ausbildende Teil des Ankers zumindest im Bereich einer außenliegenden Anschlagkante eine Oberfläche, die strukturiert, gehärtet und/oder mit einer verschleißreduzierenden Beschichtung versehen ist. Dadurch kann der Verschleiß weiter gemindert werden. Die verschleißmindernden Maßnahmen können insbesondere eine Härtung durch Plasmanitrieren umfassen. Durch Abdecken der nicht zu härtenden Oberflächen kann das Härten lokal auf die verschleißgefährdeten Bereiche begrenzt werden.

Die Maßnahmen zur Verschleißminimierung - einzeln oder in Kombination - können auch an einem separaten ringförmigen Teil vorgenommen werden, das anschließend mit dem ringförmigen, die Dichtfläche ausbildenden Teil fest verbunden wird. Die Verbindung kann beispielsweise eine Press- und/oder Schweißverbindung sein. Diese Vorgehensweise besitzt den Vorteil, dass durch die verschleißmindernden Maßnahmen die Dichtfunktion der angrenzenden Dichtfläche nicht beeinträchtigt wird. Insbesondere kann einem Verzug des die Dichtfläche ausbildenden Teils entgegengewirkt werden, wenn eine Maßnahme, wie beispielsweise das Härten, lokal begrenzt werden soll.

Um den Verschleiß zu reduzieren, kann ferner vorgesehen sein, dass das ringförmige, die Dichtfläche ausbildende Teil des Ankers radial außen eine dem Ventilsitzelement zugewandte Opferkante ausbildet. Das heißt, dass ein gewisser Verschleiß in Kauf genommen wird, der jedoch auf den Bereich der Opferkante begrenzt ist. Durch einen Materialwechsel und/oder einen Höhenversprung kann der Verschleiß auf die Opferkante begrenzt werden. Um den Verschleiß im Bereich der Opferkante zu verzögern, kann auch diese eine Oberfläche besitzen, die strukturiert, gehärtet und/oder mit einer verschleißreduzierenden Beschichtung versehen ist.

Gemäß einer bevorzugten Ausführungsform der Erfindung umfasst der Anker ein ring- oder scheibenförmiges Teil, das zur Ausbildung einer Polfläche zumindest teilweise aus einem magnetischen oder magnetisierbaren Material gefertigt ist. Durch dieses Teil wird demnach die Ankerfunktion realisiert. Im Übrigen kann der Anker aus einem nichtmagnetischen bzw. nichtmagnetisierbaren Material gefertigt sein, da die Ankerfunktion auf das ring- oder scheibenförmige Teil begrenzt werden kann.

Der Außendurchmesser des ring- oder scheibenförmigen Teils ist vorzugsweise auf den Außendurchmesser des Elektromagneten abgestimmt, so dass hohe Magnetkräfte erzielt werden, die auf den Anker einwirken.

Ist das die Polfläche ausbildende Teil scheibenförmig ausgebildet, ist es im Zentrum des Verbundkörpers angeordnet. Radial außen schließt dann mindestens ein ringförmiges Teil an, das eine Dichtfläche zur Realisierung der Dichtfunktion ausbildet.

Ist das die Polfläche ausbildende Teil ringförmig ausgebildet, kann im Zentrum ein scheibenförmiges Teil angeordnet sein, das eine weitere Dichtfläche ausbildet, die mit mindestens einer weiteren Durchströmöffnung des Ventilsitzelements zusammenwirkt. Im Übrigen kann der Verbundkörper den zuvor beschriebenen Aufbau aufweisen.

Die Verbindung der mehreren Teile des Ankers erfolgt vorzugsweise mittels einer Press- und/oder Schweißverbindung. Beispielsweise können zunächst zwei Teile verpresst und anschließend verschweißt werden. Die Schweißverbindung gewährleistet eine hohe Festigkeit des Verbundkörpers.

Die mehrteilige Ausführung des Ankers besitzt nicht nur den Vorteil, dass die mehreren Teile aus unterschiedlichen Materialien gefertigt sein können, sondern ferner, dass zumindest zwei Teile des Ankers unterschiedliche Dicken aufweisen können. Hieraus folgt, dass der Anker an zumindest einer Stirnseite mindestens eine Stufe ausbilden kann. Insbesondere kann das zur Realisierung der Ankerfunktion dienende Teil dicker ausgeführt sein, um beispielsweise eine geringere Festigkeit des ferritischen Materials gegenüber dem vorzugsweise hochfesten Material der übrigen Teile auszugleichen.

Gemäß einer bevorzugten Ausführungsform der Erfindung ist der Elektromagnet in einem topfförmigen Magnetgehäuse aufgenommen, das mindestens eine axial, radial oder schräg verlaufende Zuströmöffnung besitzt. Das Gasventil kann in diesem Fall axial oder radial angeströmt werden und ist somit variabel einsetzbar.

Die den Anker in Schließrichtung belastende Schließfeder kann eine Schraubendruckfeder sein, die zentral angeordnet ist, so dass der Anker weitgehend mittig belastet ist. Die Schraubendruckfeder ist vorzugsweise einerseits am Anker, andererseits am Elektromagneten abgestützt.

Alternativ kann die Schließfeder als Wellenfeder, insbesondere als Smalley-Wellenfeder, ausgebildet sein. Die Wellenfeder belastet den Anker weiter radial außen, das heißt außermittig. Da Wellenfedern in der Regel mehrere Auflagepunkte besitzen, die über den Umfang gleichmäßig verteilt sind, ist ferner gewährleistet, dass der Anker in Umfangsrichtung gleichmäßig belastet wird und demzufolge weniger zum Verkippen neigt. Vorzugsweise ist der Anker im Bereich seiner Dichtfläche von der Schließkraft der Schließfeder beaufschlagt, so dass ein dichtes Schließen des Gasventils gewährleistet ist. Vorzugsweise ist die Wellenfeder derart angeordnet, dass sie ein topfförmiges Magnetgehäuse zumindest bereichsweise umgibt.

Gemäß einer weiteren bevorzugten Ausführungsform der Erfindung sind mehrere dezentral angeordnete Schraubendruckfedern als Schließfedern vorgesehen. Diese sind vorzugsweise in gleichem Winkelabstand zueinander angeordnet, um eine gleichmäßige Verteilung der Schließkraft zu bewirken.

Bevorzugte Ausführungsformen der Erfindung werden nachfolgend anhand der beigefügten Zeichnungen näher erläutert. Diese zeigen:
Fig. 1 einen schematischen Längsschnitt durch eine bevorzugte Ausführungsform eines erfindungsgemäßen Gasventils,
Fig. 2 eine perspektivische Darstellung des Ankers des Gasventils der Fig. 1,
Fig. 3 eine perspektivische Darstellung eines Ankers für ein erfindungsgemäßes Gasventil gemäß einer ersten Abwandlung,
Fig. 4 eine perspektivische Darstellung eines Ankers für ein erfindungsgemäßes Gasventil gemäß einer zweiten Abwandlung und
Fig. 5 eine perspektivische Darstellung eines Ankers für ein erfindungsgemäßes Gasventil gemäß einer dritten Abwandlung.

### Ausführliche Beschreibung der Zeichnungen

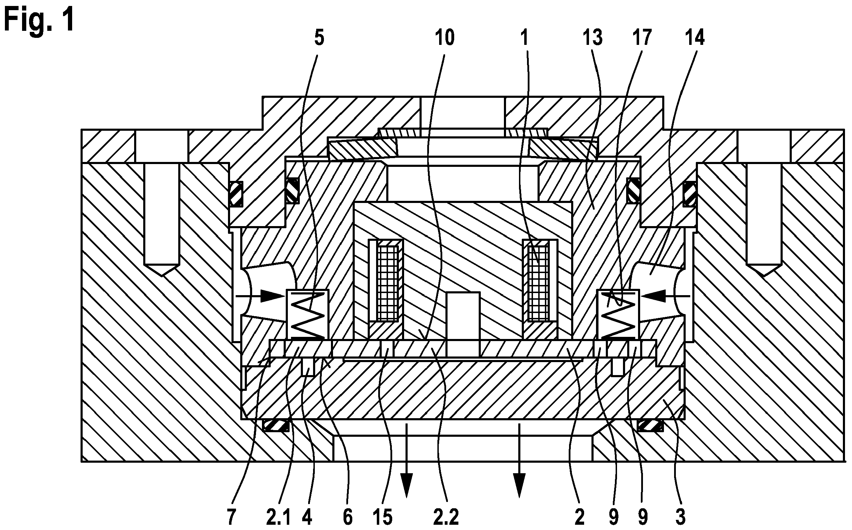

Das in der Fig. 1 schematisch dargestellte Gasventil umfasst einen Elektromagneten 1 zur Einwirkung auf einen Anker 2, der als flache Scheibe ausgebildet ist. Der Anker 2 weist an seiner Unterseite eine Dichtfläche 6 zum Schließen schlitzartiger Durchströmöffnungen 4 auf, die in einem plattenförmigen Ventilsitzelement 3 ausgebildet sind. Der Anker 2 bildet somit zugleich ein Dichtelement aus. Der Anker 2 besitzt demnach mehrere Funktionen.

In Richtung des Ventilsitzelements 3 wird der Anker 2 von der Federkraft mehrerer dezentral angeordneter Schließfedern 5 beaufschlagt, die vorliegend als Schraubendruckfedern ausgebildet sind. Die Anordnung der Schließfedern 5 ist derart gewählt, dass sie den Anker 2 unmittelbar oberhalb der schlitzartigen Durchströmöffnungen 4 des Ventilsitzelements 3 belasten. Die Schließfedern 5 sind einerseits unmittelbar am Anker 2 und andererseits an einem topfförmigen Magnetgehäuse 13 abgestützt, in dem der Elektromagnet 1 aufgenommen ist. Das Magnetgehäuse 13 weist zur Aufnahme der Schließfedern 5 stirnseitige Ausnehmungen 17 auf, in die radial verlaufende Zuströmbohrungen 14 münden. Das Gasventil der Fig. 1 wird somit radial angeströmt.

Zum Öffnen des Gasventils wird der Elektromagnet 1 bestromt. Es baut sich ein Magnetfeld auf, dessen Magnetkraft den Anker 2 in Richtung des Elektromagneten 1 bewegt. Dabei hebt der Anker 2 vom Ventilsitzelement 3 ab und gibt die im Ventilsitzelement 3 ausgebildeten Durchströmöffnungen 4 frei. Zum Schließen wird die Bestromung des Elektromagneten 1 beendet, das Magnetfeld baut sich ab und der Anker 2 wird über die Federkraft der Schließfedern 5 in seine Ausgangslage zurückgestellt, wobei die am Anker ausgebildete Dichtfläche 6 die im Ventilsitzelement 3 ausgebildeten Durchströmöffnungen 4 verschließt.

Um den mehreren Funktionen des Ankers 2 eines erfindungsgemäßen Gasventils gerecht zu werden, ist dieser als Verbundkörper ausgebildet, d. h. aus mehreren Teilen 2.1, 2.2, 2.3 zusammengesetzt. Die mehreren Teile 2.1, 2.2, 2.3 können sich hinsichtlich ihres Materials, ihrer Oberflächenbearbeitung und/oder hinsichtlich ihrer Dicke unterscheiden.

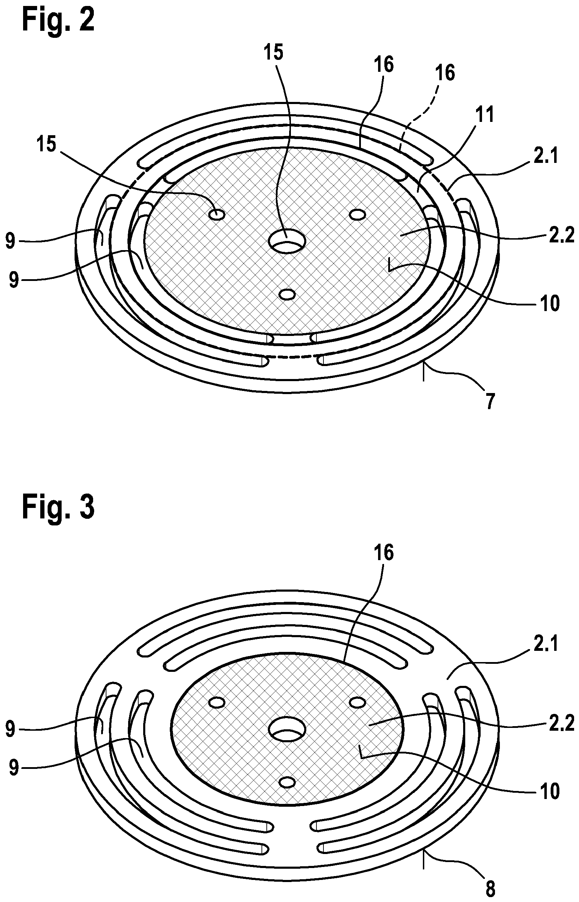

Der Anker 2 des Gasventils der Fig. 1 ist schematisch in der Fig. 2 dargestellt. Er umfasst ein ringförmiges Teil 2.1, das ein scheibenförmiges Teil 2.2 umgibt. Beide Teile 2.1, 2.2 sind über eine in einem Verbindungsbereich 16 angeordnete Laserschweißnaht fest verbunden. Da im Verbindungsbereich 16 kreisbogenförmige Durchströmöffnungen 9 angeordnet sind, erfolgt die Verbindung der beiden Teile 2.1, 2.2 im Wesentlichen über Stege 11. Ferner weist das scheibenförmige Teil 2.2 vier Druckausgleichsöffnungen 15 auf, von denen eine zentral angeordnet ist.

Das scheibenförmige Teil 2.2 des Ankers 2 dient der Realisierung der Ankerfunktion. Zur Ausbildung einer Polfläche 10 ist das scheibenförmige Teil 2.2 aus einem ferritischen Werkstoff gefertigt. Das mit dem scheibenförmigen Teil 2.2 verbundene ringförmige Teil 2.1 bildet die Dichtfläche 6 aus und dient somit als Dichtelement.

Im ringförmigen Teil 2.1 sind weitere kreisbogenförmige Durchströmöffnungen 9 ausgebildet, welche die Dichtfläche 6 des ringförmigen Teils 2.1 gegenüber einer Anschlagkante 7 absetzen. Da die Anschlagkante 7 besonders hohen Belastungen ausgesetzt ist, insbesondere bei einer Schräglage des Ankers 2, weist das ringförmige Teil 2.1 in diesem Bereich eine verschleißmindernde Beschichtung auf.

Alternativ kann - wie in der Fig. 2 angedeutet - die Anschlagkante 7 auch durch ein weiteres ringförmiges Teil ausgebildet werden, das mit dem die Dichtfläche 6 ausbildenden Teil 2.1 in einem Verbindungsbereich 16 über eine weitere Laserschweißnaht fest verbunden ist.

Weitere bevorzugte Ausführungsformen eines als Verbundkörper ausgebildeten Ankers 2 für ein erfindungsgemäßes Gasventil sind den Fig. 3 bis 5 zu entnehmen.

Der in der Fig. 3 dargestellte Anker 2 unterscheidet sich von dem der Fig. 2 vorrangig dadurch, dass das ringförmige Teil 2.1 anstelle der Anschlagkante 7 eine Opferkante 8 ausbildet. Im Bereich der Opferkante 8 ist der Anker 2 dicker ausgebildet, so dass ein geringer Verschleiß hinnehmbar ist.

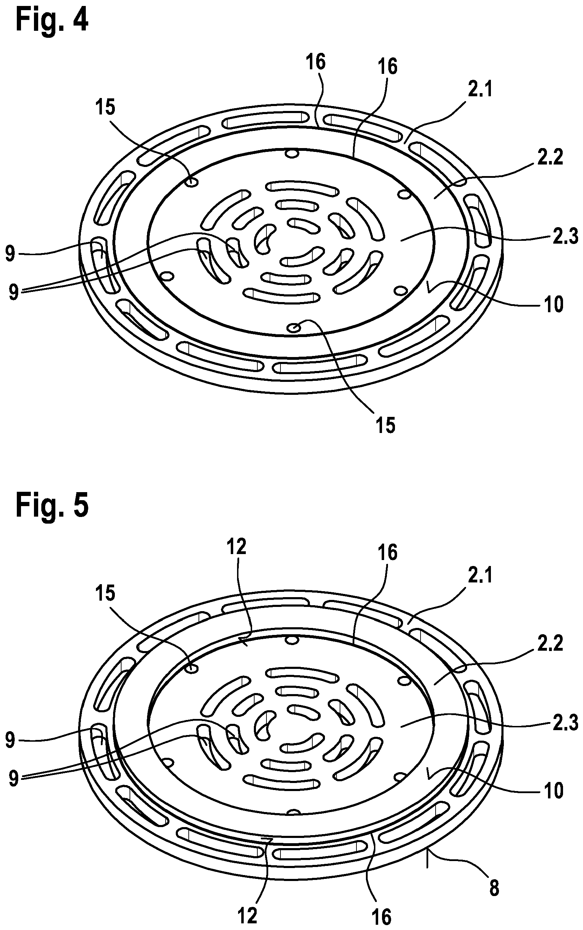

Fig. 4 zeigt einen aus mindestens drei Teilen 2.1, 2.2, 2.3 zusammengesetzten Anker 2. Die Ankerfunktion wird hier von einem ringförmigen Teil 2.2 übernommen, das ein scheibenförmiges Teil 2.3 umgibt und selbst von einem weiteren ringförmigen Teil 2.1 umgeben ist. Die radial außen und radial innen angeordneten Teile 2.1, 2.3 bilden Dichtflächen 6 aus, die mit Durchströmöffnungen 4 des Ventilsitzelements 3 zusammenwirken. Um ein dichtes Schließen der Durchströmöffnungen 4 des Ventilsitzelements 3 zu gewährleisten, sind die im Bereich der Dichtflächen 6 angeordneten Durchströmöffnungen 9 und Druckausgleichsöffnungen 15 radial versetzt zu den Durchströmöffnungen 4 des Ventilsitzelements 3 angeordnet. Die mehreren Teile 2.1, 2.2, 2.3 sind jeweils in einem Verbindungsbereich 16 über eine Laserschweißnaht fest miteinander verbunden.

Der Fig. 5 ist eine weitere Ausführungsform eines Ankers 2 für ein erfindungsgemäßes Gasventil zu entnehmen. Diese unterscheidet sich von der der Fig. 4 im Wesentlichen dadurch, dass das ringförmige Teil 2.2, das die Ankerfunktion übernimmt, dicker als die anderen Teile 2.1, 2.3 ausgebildet ist, um die geringere Festigkeit des ferritischen Werkstoffs zu kompensieren, aus dem das ringförmigen Teil 2.2 gefertigt ist. Durch die unterschiedlichen Dicken der Teile 2.1, 2.2, 2.3 weist der Anker 2 an einer Stirnseite, und zwar an der Stirnseite, an der die Polfläche 10 ausgebildet ist, Stufen 12 auf.

## Patentansprüche

1. Gasventil zum Eindosieren eines gasförmigen Brennstoffs in einen Ansaugtrakt einer Verbrennungskraftmaschine, umfassend einen Elektromagneten (1) und einen mit dem Elektromagneten (1) zusammenwirkenden hubbeweglichen Anker (2), der in Richtung eines Ventilsitzelements (3), in dem mindestens eine Durchströmöffnung (4) ausgebildet ist, von der Federkraft mindestens einer Schließfeder (5) beaufschlagt ist, wobei der Anker (2) als scheibenförmiger Verbundkörper ausgebildet ist, der mindestens zwei, vorzugsweise drei, konzentrisch zueinander angeordnete, ineinander liegende Teile (2.1, 2.2, 2.3) umfasst, von denen mindestens ein Teil (2.1) ringförmig ausgebildet ist und eine mit der Durchströmöffnung (4) zusammenwirkende Dichtfläche (6) ausbildet, **dadurch gekennzeichnet, dass** das ringförmige, die Dichtfläche (6) ausbildende Teil (2.1) des Ankers (2) mindestens eine Durchströmöffnung (9) aufweist, die vorzugsweise kreisbogenförmig und radial versetzt zu der mindestens einen Durchströmöffnung (4) des Ventilsitzelements (3) angeordnet ist.

2. Gasventil nach Anspruch 1,
**dadurch gekennzeichnet, dass** das ringförmige, die Dichtfläche (6) ausbildende Teil (2.1) des Ankers (2) zumindest im Bereich einer außenliegenden Anschlagkante (7) eine Oberfläche besitzt, die strukturiert, gehärtet und/oder mit einer verschleißreduzierenden Beschichtung versehen ist.

3. Gasventil nach Anspruch 1 oder 2,
**dadurch gekennzeichnet, dass** das ringförmige, die Dichtfläche (6) ausbildende Teil (2.1) des Ankers (2) radial außen eine dem Ventilsitzelement (3) zugewandte Opferkante (8) ausbildet.

4. Gasventil nach einem der vorhergehenden Ansprüche,
**dadurch gekennzeichnet, dass** der Anker (2) ein ring- oder scheibenförmiges Teil (2.2, 2.3) umfasst, das zur Ausbildung einer Polfläche (10) zumindest teilweise aus einem magnetischen oder magnetisierbaren Material gefertigt ist.

5. Gasventil nach einem der vorhergehenden Ansprüche,
**dadurch gekennzeichnet, dass** der Anker (2) ein scheibenförmiges Teil (2.3) umfasst, das eine weitere Dichtfläche (6) ausbildet, die mit mindestens einer weiteren Durchströmöffnung (4) des Ventilsitzelements (3) zusammenwirkt.

6. Gasventil nach einem der vorhergehenden Ansprüche,
**dadurch gekennzeichnet, dass** zumindest zwei Teile (2.1, 2.2, 2.3) des Ankers (2) unterschiedliche Dicken aufweisen, so dass der Anker (2) an zumindest einer Stirnseite mindestens eine Stufe (12) ausbildet.

7. Gasventil nach einem der vorhergehenden Ansprüche,
**dadurch gekennzeichnet, dass** der Elektromagnet (1) in einem topfförmigen Magnetgehäuse (13) aufgenommen ist, das mindestens eine axial, radial oder schräg verlaufende Zuströmöffnung (14) besitzt.

8. Gasventil nach einem der vorhergehenden Ansprüche,
**dadurch gekennzeichnet, dass** die Schließfeder (5) als zentrale Schraubendruckfeder oder als Wellenfeder, insbesondere als Smalley-Wellenfeder, ausgebildet ist.

9. Gasventil nach einem der vorhergehenden Ansprüche,
**dadurch gekennzeichnet, dass** mehrere dezentral angeordnete Schraubendruckfedern als Schließfedern (5) vorgesehen sind.

## Claims

1. Gas valve for metering a gaseous fuel into an intake section of an internal combustion engine, comprising an electromagnet (1) and an armature (2) which interacts with the electromagnet (1), can be moved in a reciprocating manner, and is loaded by the spring force of at least one closing spring (5) in the direction of a valve seat element (3), in which at least one throughflow opening (4) is configured, the armature (2) being configured as a disc-shaped composite body which comprises at least two, preferably three, parts (2.1, 2.2, 2.3) which are arranged concentrically with respect to one another, lie inside one another, and of which at least one part (2.1) is of annular configuration and configures a sealing face (6) which interacts with the throughflow opening (4), **characterized in that** the annular part (2.1) of the armature (2), which annular part (2.1) configures the sealing face (6), has at least one throughflow opening (9) which is preferably arcuate and is arranged offset radially with respect to the at least one throughflow opening (4) of the valve seat element (3).

2. Gas valve according to Claim 1, **characterized in that** the annular part (2.1) of the armature (2), which annular part (2.1) configures the sealing face (6), has, at least in the region of an outer stop edge (7), a surface which is structured, hardened and/or is provided with a wear-reducing coating.

3. Gas valve according to Claim 1 or 2, **characterized in that** the annular part (2.1) of the armature (2), which annular part (2.1) configures the sealing face (6), configures, radially on the outside, a sacrificial edge (8) which faces the valve seat element (3).

4. Gas valve according to one of the preceding claims, **characterized in that** the armature (2) comprises an annular or disc-shaped part (2.2, 2.3) which, in order to configure a pole face (10), is configured at least partially from a magnetic or magnetizable material.

5. Gas valve according to one of the preceding claims, **characterized in that** the armature (2) comprises a disc-shaped part (2.3) which configures a further sealing face (6) which interacts with at least one further throughflow opening (4) of the valve seat element (3).

6. Gas valve according to one of the preceding claims, **characterized in that** at least two parts (2.1, 2.2, 2.3) of the armature (2) have different thicknesses, with the result that the armature (2) configures at least one step (12) on at least one end side.

7. Gas valve according to one of the preceding claims, **characterized in that** the electromagnet (1) is received in a pot-shaped magnet housing (13) which has at least one axially, radially or obliquely running inflow opening (14).

8. Gas valve according to one of the preceding claims, **characterized in that** the closing spring (5) is configured as a central compression coil spring or as a wave spring, in particular as a Smalley wave spring.

9. Gas valve according to one of the preceding claims, **characterized in that** a plurality of decentrally arranged compression coil springs are provided as closing springs (5) .

## Revendications

1. Soupape à gaz pour le dosage d'un combustible gazeux dans un conduit d'admission d'un moteur à combustion interne, comprenant un électroaimant (1) et un induit (2) à course de déplacement coopérant avec l'électroaimant (1), qui est sollicité, dans la direction d'un élément de siège de soupape (3) dans lequel est réalisée au moins une ouverture de passage d'écoulement (4), par la force de ressort d'au moins un ressort de fermeture (5), l'induit (2) étant réalisé sous forme de corps composite en forme de disque qui comprend deux, de préférence trois, parties (2.1, 2.2, 2.3) disposées les unes dans les autres, concentriquement les unes aux autres, dont au moins une partie (2.1) est réalisée sous forme annulaire et constitue une surface d'étanchéité (6) coopérant avec l'ouverture de passage d'écoulement (4), **caractérisée en ce que** la partie de forme annulaire (2.1) de l'induit (2) constituant la surface d'étanchéité (6) présente au moins une ouverture de passage d'écoulement (9) qui est disposée de préférence sous forme d'arc de cercle et de manière décalée radialement par rapport à l'au moins une ouverture de passage d'écoulement (4) de l'élément de siège de soupape (3) .

2. Soupape à gaz selon la revendication 1,
**caractérisée en ce que** la partie annulaire (2.1) de l'induit (2) formant la surface d'étanchéité (6) présente au moins dans la région d'une arête de butée (7) située à l'extérieur une surface qui est structurée, durcie et/au pourvue d'un revêtement réduisant l'usure.

3. Soupape à gaz selon la revendication 1 ou 2,
**caractérisée en ce que** la partie annulaire (2.1) de l'induit (2) formant la surface d'étanchéité (6) constitue radialement à l'extérieur une arête sacrificielle (8) tournée vers l'élément de siège de soupape (3).

4. Soupape à gaz selon l'une quelconque des revendications précédentes,
**caractérisée en ce que** l'induit (2) comprend une partie de forme annulaire ou en forme de disque (2.2, 2.3) qui est fabriquée au moins en partie en matériau magnétique ou magnétisable pour constituer une surface polaire (10).

5. Soupape à gaz selon l'une quelconque des revendications précédentes,
**caractérisée en ce que** l'induit (2) comprend une partie en forme de disque (2.3) qui constitue une surface d'étanchéité supplémentaire (6) qui coopère avec au moins une ouverture de passage d'écoulement supplémentaire (4) de l'élément de siège de soupape (3).

6. Soupape à gaz selon l'une quelconque des revendications précédentes,
**caractérisée en ce qu'**au moins deux parties (2.1, 2.2, 2.3) de l'induit (2) présentent des épaisseurs différentes de telle sorte que l'induit (2) constitue au moins un étage (12) au niveau d'au moins un côté frontal.

7. Soupape à gaz selon l'une quelconque des revendications précédentes,
**caractérisée en ce que** l'électroaimant (1) est reçu dans un boîtier magnétique en forme de pot (13) qui possède au moins une ouverture d'afflux (14) s'étendant axialement, radialement ou obliquement.

8. Soupape à gaz selon l'une quelconque des revendications précédentes,
**caractérisée en ce que** le ressort de fermeture (5) est réalisé sous forme de ressort de compression hélicoïdal central ou sous forme de ressort ondulé, en particulier sous forme de ressort ondulé de Smalley.

9. Soupape à gaz selon l'une quelconque des revendications précédentes,
**caractérisée en ce que** plusieurs ressorts de compression hélicoïdaux disposés de manière décentralisée sont prévus en tant que ressorts de fermeture (5).
